# EUROPEAN PATENT SPECIFICATION

(11) **EP 1 731 813 B1**
(45) Date of publication and mention of the grant of the patent: **19.05.2010**
(21) Application number: 06252446.7
(22) Date of filing: 09.05.2006
(51) Int. Cl.: F16L 3/14, F16L 3/133

(54) **Clipping bracket**
Klipsstützträger
Patte de fixation à clipsage

(30) Priority: 07.06.2005 GB 0511508
(43) Date of publication of application: 13.12.2006
(73) Proprietor: Rolls-Royce plc, 65 Buckingham Gate London SW1E 6AT (GB)
(72) Inventor: Kirby, Stuart James, Allestree, Derby DE22 2AP (GB)
(74) Representative: Gunn, Michael Alan

(56) References cited:
- DE-U1- 20 315 825
- GB-A- 1 090 200
- US-A- 3 201 906
- US-A- 4 306 871
- US-A- 5 350 141

## Description

The present invention relates to a clipping bracket for holding, for example, pipes and harnesses to gas turbine engine casings.

It is necessary on gas turbine engines to locate and support pipes and harnesses that carry fluids and electrical signals/power associated with the efficient running of the engine and ensure that they do not touch other hardware or each other, to avoid frettage. Pipes, harnesses and flanges also need to be held away from each other to avoid heat input. The bolts around the circumference of the flange are convenient features from which pipes/harnesses are supported. 'Clipping brackets' are designed to bridge the gap between the flange and a clip that clamps around the pipe or harness.

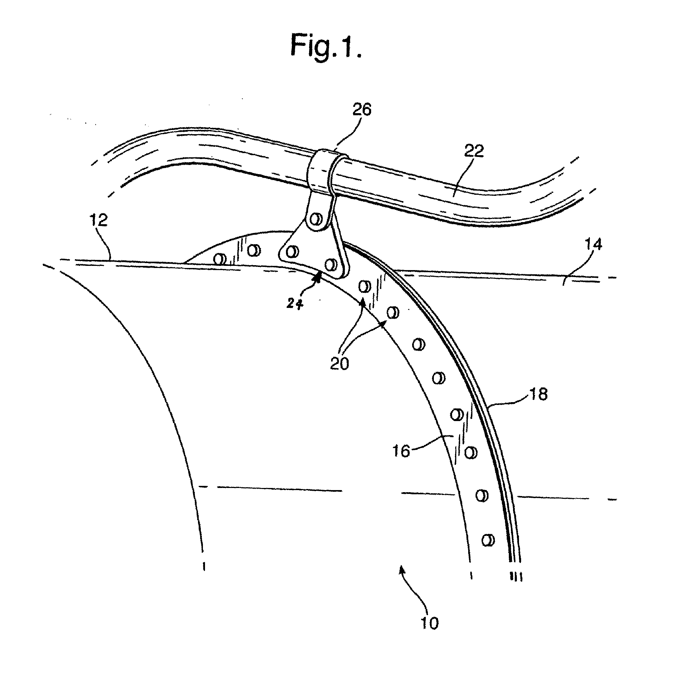

These clipping brackets locate off two fixings on the flange as shown in Figure 1 to prevent rotation and locate the bracket and support any loads that pass through it. The flanges have to be carefully designed to ensure minimal weight/material and maximum sealing. This inevitably results in variation in the distance between the bolts around the circumference of the flange. Thus, when a new engine is designed, each flange is different and so previously designed brackets, which have a fixed distance between the attachment points, cannot be re-used. Thus the disadvantage or problem of this prior art bracket is that any one such bracket, designed for one position (generally), cannot be re-used on other flanges or other engine types.

One known solution to this problem is to slot one of the holes while still using it in a conventional manner i.e. the slot is under the head of the fixing. This is acceptable in non-critical locations, such as the hinges on kitchen-cupboard doors, but is unacceptable where the fixing is critical through having been designed for minimum weight/material such as in an aeroengine. This is because the nut/bolt under-head contact area becomes unacceptably small with any significant degree of slotting. Specifically, the contact area must be at least 66% of the bolt cross sectional area and in contact around the whole of its periphery. A known solution to this further problem is to provide a large slot in the bracket but place a washer over the bracket, however, for critical flanges experience has shown that the fitter can leave the washer off, thus jeopardizing the integrity of the product. Washers are sometimes used on critical flanges but, as an error-proofing measure, either all fixings have washers or none, thus having washers over significantly slotted holes is unacceptable on critical flange designs.

An assembly according to the preamble of claim 1 is known from US-A-4 306 871.

Therefore it is an object of the present invention to provide a clipping bracket that overcomes the aforementioned problems and disadvantages.

In accordance with the present invention there is provided an assembly comprising a first component, a second component having an array of fixings, and a clipping bracket for mounting the first component to the second component, the bracket comprises a first leg having a first end and a second end, the first leg, in use, being attached to and extending between the first and second components respectively, at the second end the bracket is attachable to one of the fixings; the bracket further comprises a clipping member extending from the second end and partly defined by two fingers arranged to be engagable around, but not under, either side of an adjacent fixing; and the clipping member further comprises at least one bend arranged so that the fingers are urged against the second component when the fixing is fully engaged to the second end.

Preferably, the fingers extend sufficiently so that in use they are capable of engaging irregularly spaced fixings in the array of fixings.

Furthermore, the clipping member may comprise a second bend arranged so that the bracket is reversible and the fingers are urged against the component when the fixing is fully engaged to the second end

Advantageously, the bracket comprises at least one tab extending therefrom and arranged so that the fingers or second end are urged against the component when the fixing is fully engaged to the second end.

Advantageously, at least one of the fingers is twisted along its length so that at least a portion of the finger extends out of the plane of the bracket.

Preferably, the fingers are joined together at their extremities.

The present invention will be more fully described by way of example with reference to the accompanying drawings in which:
Figure 1 is a view of part of a casing of a ducted fan gas turbine engine showing a conventional bracket;
Figure 2 is a view on a clipping bracket in accordance with a first embodiment ;
Figure 3 is a view on a clipping bracket in accordance with a second embodiment ;
Figure 4 is a side view on a clipping bracket in accordance with a third embodiment ;
Figure 5a-c are schematic side views on arrow A in Fig 2 of a number of embodiments of the present invention having bends to help prevent vibration when in use;
Figure 5d is schematic side view on arrow B in Fig 2 of another embodiment of the present invention capable of preventing vibration when in use.

With reference to Figure 1, a conventional ducted fan gas turbine engine generally indicated at 10 has a principal and rotational axis. The engine 10 comprises rotating turbo-machinery such as compressors and turbines each surrounded by a casing 12, 14. Adjacent casings 12, 14 are joined together via flanges 16, 18 using an array of bolt fixings 20. It is necessary to locate and support pipes and harnesses e.g. 22 that carry fluids and/or electrical signals/power associated with the efficient running of the engine 10 and ensure that they do not touch other hardware or each other, to avoid frettage. The pipe 22 and flanges 16, 18 also need to be held away from each other to avoid heat transfer therebetween. The fixings 20 are convenient features from which the pipe 22 can be supported and so a bracket 24 is used to bridge the gap between the flange 16, 18 and a clip 26 that clamps around the pipe 22. The relatively thin bracket 24 loses heat quickly and therefore transfers minimal heat to the pipe 22, or vice versa in other cases.

The disadvantage of these brackets 24 is that they locate off two fixings 20 on the flange 16, 18. Location off only one fixing 20 could allow the bracket 24 to rotate leading to dislocation of the pipe 22 and subsequent potential failure. The flanges 16, 18 have to be carefully designed to ensure minimal weight/material and maximum sealing. This inevitably results in variation in the distance between the bolts 20 around the circumference of the flange 16, 18. Thus, when a new engine is designed, having several different flanges and each flange having differently spaced fixings, any one previously designed brackets, which have a fixed distance between the attachment points, cannot be re-used. Thus any one conventional bracket designed for one position (generally) cannot be re-used on other flanges or other engine types.

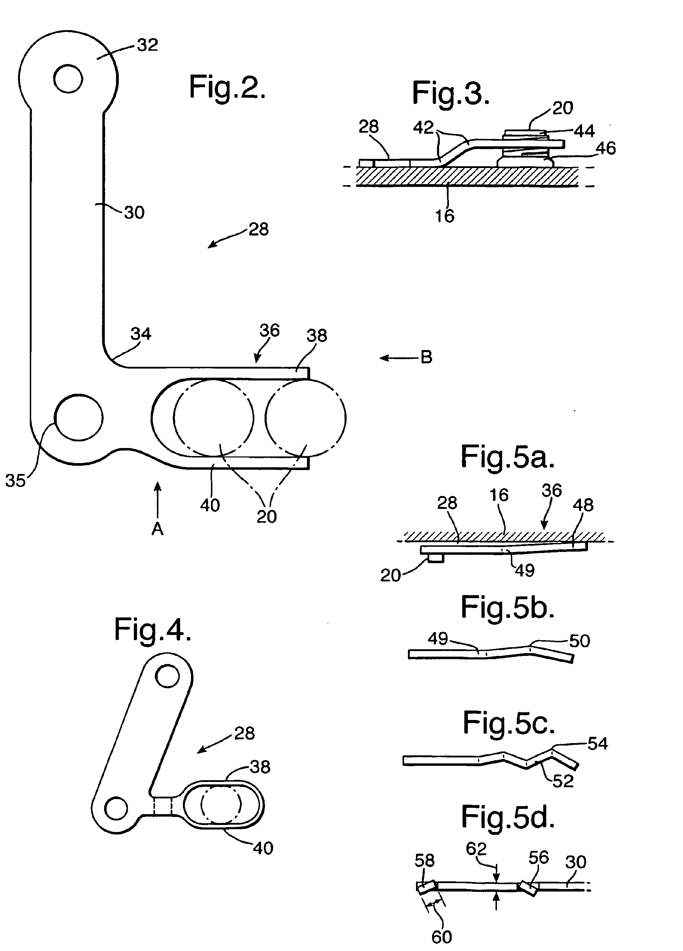

Referring now to Figure 2, a clipping bracket 28 is intended to replace the prior art bracket 24 and is designed to attach to the clip 26 in the same manner. The clipping bracket 28 comprises a first leg 30 capable of being attached to the clip 26 at a first end 32 and at a second end 34 attached to one of the fixings 20 via a bolt/nut through aperture 35. Also at the second end 34 extends a clipping or slotted member 36, which comprises two spaced apart fingers 38, 40. The defined slot is sized to fit around and over an adjacent fixing 20 rather than underneath the head (nut/bolt) of the fixing 20. Thus this arrangement accommodates any relatively large variation in the distance between fixings 20 on the flange 16, 18 and so these brackets 28 may be used not only on one flange 16, 18 but employed and re-used elsewhere. Because the fingers 38, 40 do not fit between the bolt/nut fixing 20 and the flange, where substantial compressive forces are present, they are not damaged and there is no reduction in the integrity of the fixing/flange design.

The clipping member 36 also provides location for the bracket 28 to ensure that it is correctly positioned. Under normal loads, the second end 34 / fixing 20 becomes the main load path. In certain circumstances, such as abnormal aircraft manoeuvres or when used as a hand or foot hold by a mechanic, lateral loads applied to the pipe 22 still pass through the second end 34 / fixing 20, but rotation about this attachment is prevented by the clipping member 36 engaging the sides of its fixing 20.

The principle advantage of the clipping brackets 28, designed for use on one flange or engine, is that it may be re-used on another flange having different fixing spacing. The prior art design cannot achieve this because there is a fixed distance between the holes that mate with the flange.

Ability to re-use the bracket 28 provides significant financial benefit because the process of creating a new clipping bracket design and supporting it in production and service requires considerable use of resource, approximately 2 man months per part or 4 man-years every year across the applicant's business.

In addition, if the brackets are used in larger quantities through being used on multiple flanges/engines, then their unit cost is lower.

Furthermore, the design of the pipes and harnesses is on the critical path of an engine development programme (EDP), thus if the designers can choose to re-use brackets then the reduced complexity of the task and lower peak resource loading, leads to better control and the EDP length is reduced.

The clipping bracket 28 has fingers 38, 40 that preferably comprise a small clearance gap around the outermost diameter of the fixing 20 (nut or bolt-head) and are designed to lay substantially flat against the flange 16.

Referring now to Figure 3, the bracket 28 comprises bends 42 so that the fingers 38, 40 are lifted off the surface of the flange 16 and abut the profile of the bolt-head 44 or nut - i.e. on the sides of the torque feature or the area where the torque feature transitions to the outermost diameter. This is especially applicable to where a larger diameter washer 46 is used under the bolt head 44, which would otherwise cause the fingers to be overly spaced apart and increase the weight of the bracket.

Figure 4 shows the fingers 38, 40 joined together at their extremities to provide a stronger and stiffer arrangement that is useful in more heavily loaded conditions.

Referring to Figure 5, in circumstances where the clipping bracket 28 is subject to vibration and consequential frettage and damage, the fingers 38, 40 are arranged to be pre-loaded or sprung against either the flange 16 or fixing 20 to damp out any vibration.

In Figure 5a, the slotted member 36 defines a single bend such that when the fixing 20 tightened free ends 48 of the fingers 38, 40 are urged against the flange 16.

In figures 5b and 5c multiple bends 50, 52, and 54 are defined in the clipping member 36 and preferably in the fingers 38, 40 allow the bracket to be reversible as each bend is capable of exerting a damping force whichever way around the bracket is.

In the embodiment shown in Figure 5d, the fingers 38, 40 are twisted along their length such that a part of each finger is out of the plane of the main body of the bracket 28 and would ensure contact with the flange when fitted. Preferably, the maximum twist occurs at the free ends of the fingers to ensure contact with the supporting surface as close to tip as possible for maximum damping. Preferably the width 60 of the fingers is greater than the thickness 62 of the bracket 28 so that part of the finger 38, 40 extends each side of the bracket 28, thus the bracket 28 is reversible.

It should be appreciated that the clipping bracket 28 of the present invention may be used on any arrangement where two or more components need to be joined together wherein, a) the fixings 20 are pre-existing or there are constraints which prevent standardization of the distance between them (e.g. flanges designed for minimum weight/material or multiple flanges), b) the components impose only modest loads onto the fixings (e.g. pipes & harnesses) and c) the standardization of brackets 28 provides a significant financial benefit through being able to handle fewer part numbers thereby, realizing the advantages of lower design/procurement costs, larger batch size leading to lower manufacturing costs and shorter program time scales.

## Claims

1. An assembly comprising a first component (22), a second component (12) having an array of fixings (20), and a clipping bracket (28) for mounting the first component (22) to the second component (12), the bracket (28) comprises a first leg (30) having a first end (32) and a second end (34), the first leg (30), in use, being attached to and extending between the first and second components (22, 12) respectively, at the second end (34) the bracket (28) is attachable to one of the fixings (20); the bracket (28) further comprises a clipping member (36) extending from the second end (34) and partly defined by two fingers (38, 40) arranged to be engagable around, but not under, either side of an adjacent fixing (20); **characterised in that** the clipping member (36) further comprises at least one bend (49) arranged so that the fingers (38, 40) are urged against the second component (12) when the fixing (20) is fully engaged to the second end (34).

2. A clipping bracket (28) as claimed in claim 1 wherein the fingers (38, 40) extend sufficiently so that in use they are capable of engaging irregularly spaced fixings (20) in the array of fixings (20).

3. A clipping bracket (28) as claimed in claim 1 wherein the clipping member (36) comprises a second bend (50) arranged so that the bracket (28) is reversible and the fingers (38, 40) are urged against the second component (12) when the fixing (20) is fully engaged to the second end (34).

4. A clipping bracket (28) as claimed in any one of claims 1 - 3 wherein the bracket (28) comprises at least one tab (56, 58) extending therefrom and arranged so that the fingers (38, 40) or second end (34) are urged against the second component (12) when the fixing (20) is fully engaged to the second end (34).

5. A clipping bracket (28) as claimed in any one of claims 1 - 4 wherein at least one of the fingers (38, 40) is twisted along its length so that at least a portion of the finger (28, 40) extends out of the plane of the bracket (28).

6. A clipping bracket (28) as claimed in any one of claims 1 - 5 wherein the fingers (38, 40) are joined together at their extremities.

## Patentansprüche

1. Baugruppe bestehend aus einem ersten Bauteil (22), einem zweiten mit einer Reihe von Befestigungen (20) versehenen Bauteil (12) und mit einem Klipsstützträger (28) zur Halterung des ersten Bauteils (22) an dem zweiten Bauteil (12), wobei der Klipsstützträger (28) einen ersten Schenkel (30) mit einem ersten Ende (32) und einem zweiten Ende (34) aufweist und der erste Schenkel (30) im Betrieb an dem ersten und dem zweiten Bauteil (22, 12) festgelegt ist und sich dazwischen erstreckt und wobei der Klipsstützträger (28) an seinem zweiten Ende (34) an einer der Befestigungen (20) festlegbar ist und der Klipsstützträger (28) weiter ein Klipsorgan (36) aufweist, das vom zweiten Ende (34) vorsteht und teilweise durch zwei Finger (38, 40) definiert ist, die auf beiden Seiten einer benachbarten Befestigung (20) aber nicht darunter angreifen,
**dadurch gekennzeichnet, dass** das Klipsorgan (36) wenigstens eine Abbiegung (49) derart aufweist, dass die Finger (38,40) gegen den zweiten Bauteil (12) gedrückt werden, wenn die Befestigung (20) an dem zweiten Ende (34) vollständig angreift.

2. Klipsstützträger (28) nach Anspruch 1, bei welchem sich die Finger (38,40) genügend weit erstrecken, um unregelmäßig beabstandete Befestigungen (20) in der Reihe von Befestigungen (20) erfassen zu können.

3. Klipsstützträger (28) nach Anspruch 1, bei welchem das Klipsorgan (36) eine zweite Abbiegung (50) aufweist, die so angeordnet ist, dass der Stützträger (28) umkehrbar ist und die Finger (38,40) gegen den zweiten Bauteil (12) gedrückt werden, wenn die Befestigung (20) voll auf das zweite Ende (34) angezogen wird.

4. Klipsstützträger (28) nach einem der Ansprüche 1 bis 3, bei welchem der Träger (28) wenigstens eine vorstehende Nase (56,58) aufweist, die so angeordnet ist, dass die Finger (38,49) oder das zweite Ende (34) gegen den zweiten Bauteil (12) gedrückt werden, wenn die Befestigung (20) voll gegen das zweite Ende (34) angezogen wird.

5. Klipsstützträger (28) nach einem der Ansprüche 1 bis 4, bei welchem wenigstens einer der Finger (38,40) über seine Länge derart verdrillt ist, dass sich wenigstens ein Abschnitt der Finger (38,40) aus der Ebene des Trägers (28) heraus erstreckt.

6. Klipsstützträger (28) nach einem der Ansprüche 1 bis 5, bei welchem die Finger (38,40) an ihren Enden miteinander verbunden sind.

## Revendications

1. Ensemble comprenant un premier composant (22), un second composant (12) ayant un réseau de fixations (20), et une patte de fixation à clipsage (28) pour monter le premier composant (22) sur le second composant (12), la patte de fixation (28) comprend une première branche (30) ayant une première extrémité (32) et une seconde extrémité (34), la première branche (30), en utilisation, étant fixée sur et s'étendant entre les premier et second composants (22, 12) respectivement, au niveau de la seconde extrémité (34), la patte de fixation (28) peut être fixée sur l'une des fixations (20) ; la patte de fixation (28) comprend en outre un élément de clipsage (36) s'étendant à partir de la seconde extrémité (34) et défini partiellement par deux doigts (38, 40) agencés pour pouvoir se mettre en prise autour, mais pas au-dessous, de chaque côté d'une fixation (20) adjacente ; **caractérisé en ce que** l'élément de clipsage (36) comprend en outre au moins une courbure (49) agencée de sorte que les doigts (38, 40) sont poussés contre le second composant (12) lorsque la fixation (20) est complètement mise en prise sur la seconde extrémité (34).

2. Patte de fixation à clipsage (28) selon la revendication 1, dans laquelle les doigts (38, 40) s'étendent suffisamment de sorte qu'en utilisation, ils peuvent mettre en prise des fixations (20) irrégulièrement espacées dans le réseau de fixations (20).

3. Patte de fixation à clipsage (28) selon la revendication 1, dans laquelle l'élément de clipsage (36) comprend une seconde courbure (50) agencée de sorte que la patte de fixation (28) est réversible et que les doigts (38, 40) sont poussés contre le second composant (12) lorsque la fixation (20) est complètement mise en prise sur la seconde extrémité (34).

4. Patte de fixation à clipsage (28) selon l'une quelconque des revendications 1 à 3, dans laquelle la patte de fixation (28) comprend au moins une languette (56, 58) s'étendant à partir de celle-ci et agencée de sorte que les doigts (38, 40) ou la seconde extrémité (34) sont poussés contre le second composant (12) lorsque la fixation (20) est complètement mise en prise sur la seconde extrémité (34).

5. Patte de fixation à clipsage (28) selon l'une quelconque des revendications 1 à 4, dans laquelle au moins l'un des doigts (38, 40) est vrillé le long de sa longueur de sorte qu'au moins une partie du doigt (28, 40) s'étend hors du plan de la patte de fixation (28).

6. Patte de fixation à clipsage (28) selon l'une quelconque des revendications 1 à 5, dans laquelle les doigts (38, 40) sont assemblés au niveau de leurs extrémités.
